# EUROPÄISCHE PATENTSCHRIFT

(11) **EP 4 380 358 B1**
(45) Veröffentlichungstag und Bekanntmachung des Hinweises auf die Patenterteilung: **04.12.2024**
(21) Anmeldenummer: 23748510.7
(22) Anmeldetag: 26.07.2023
(51) Int. Cl.: A01M 21/04

(54) **VERFAHREN ZUR LICHTBOGENREDUZIERUNG BEI ELEKTRO-BEHANDLUNGEN VON PFLANZEN**
METHOD FOR ARC REDUCTION DURING ELECTRICAL TREATMENTS OF PLANTS
PROCÉDÉ DE RÉDUCTION D'ARC PENDANT DES TRAITEMENTS ÉLECTRIQUES DE PLANTES

(30) Priorität: 14.10.2022 DE 102022126888
(43) Veröffentlichungstag der Anmeldung: 12.06.2024
(73) Patentinhaber: crop.zone GmbH, 52076 Aachen (DE)
(72) Erfinder: EFFEY, Fabian, 52076 Aachen (DE)
(74) Vertreter: PATERIS Patentanwälte PartmbB
(86) Internationale Anmeldenummer: PCT/EP2023/070778
(87) Internationale Veröffentlichungsnummer: WO 2024/078768

(56) Entgegenhaltungen:
- WO-A1-2019/052591
- WO-A1-2020/182818
- WO-A1-2021/053086
- DE-A1- 102020 115 923
- DE-A1- 102020 115 925

## Beschreibung

Die Erfindung betrifft ein Verfahren und eine Behandlungs-Vorrichtung zur Lichtbogenreduzierung bei Elektro-Behandlungen von Pflanzen, insbesondere während einer Sikkation von Feldfrüchten, zur Gründüngungskontrolle oder zur Kontrolle von Beikraut. Ferner betrifft die Erfindung ein Trägerfahrzeug mit einer derartigen Behandlungs-Vorrichtung und einen Bausatz, enthaltend Komponenten einer derartigen Behandlungs-Vorrichtung.

Sikkation (deutsch: Austrocknung) bezeichnet einen Vorgang in der Landwirtschaft, bei dem Kulturpflanzenbestände u.a. mit Sikkaten zum Zwecke der Abreifebeschleunigung abgetötet werden. Es erleichtert die Ernte und begünstigt den Reifezustand der Ackerfrüchte. Diese chemische Sikkation ahmt den natürlichen Austrocknungsprozess des Welkens von einjährigen Kulturpflanzen bei der Fruchtreife nach, bei dem oberirdische, grüne Pflanzenbestandteile und oberflächennahe Wurzeln und andere Pflanzenbestandteile im Boden vertrocknen. Ein willkommener Nebeneffekt ist die gleichzeitige Abtötung von Unkräutern, deren noch grüne Pflanzenteile andernfalls z.B. mit Getreide abgeerntet und den Feuchtigkeitsgehalt des Ernteguts erhöhen würden und deren Samenausfall oder weiterer Aufwuchs die Unkrautdichte auf den Feldern erhöhen kann.

Als Feld- oder Ackerfrüchte werden Kulturpflanzen bezeichnet, die auf Feldern angebaut werden. Zu den Feldfrüchten zählen Getreide, Hack- und Hülsenfrüchte, Ölfrüchte oder Pflanzen zur Grünernte, die wie z. B. Silomais als Futtermittel oder, zur Energiegewinnung genutzt werden.

Gründüngung ist eine natürliche Methode im Ackerbau zur Bodenbedeckung und -verbesserung. Man bezeichnet damit in erster Linie den gezielten Anbau mit anschließender Abtötung von Pflanzen, die nicht abgeerntet werden, sondern z.B. zum Erosionsschutz, der Nährstoffsicherung oder der Bodenverbesserung / Humusbildung auf dem Feld verbleiben. Hierzu können auch Zwischenfrüchte in der letzten Nutzungsphase verwendet werden. Als Zwischenfrucht bezeichnet man eine Feldfrucht, die zwischen anderen zur Hauptnutzung dienenden Feldfrüchten als Gründüngung oder zur Verwendung als Tierfutter angebaut wird.

Als Kontrolle von Beikraut unabhängig vom Standort wird die allgemein als Unkrautkontrolle beschriebene Methode bezeichnet, bei der beliebige Pflanzen, die am aktuellen Wuchsstandort (Feld, Wiese, Weide, Verkehrsbereich Bauwerkteile oder andere), zu einem gewählten Zeitpunkt aus funktionalen oder ästhetischen Gründen nicht gewünscht sind, durch geeignete Verfahren, hier elektrophysikalische Verfahren so behandelt werden, dass sie komplett absterben oder in ihrem weiteren Wachstum deutlich geschwächt oder gehemmt oder auf ein früheres Stadium zurückgesetzt werden.

Wenn elektrischer Strom Pflanzenteile durchströmt, werden diese in Abhängigkeit von elektrischer Stromstärke, elektrischer Spannung, Stromtyp (Gleichstrom, Wechselstrom, Frequenz, Glättungsgrad bzw. Restwelligkeit etc.) geschädigt. Eine umfassende und einheitliche Theorie der Wirkung liegt bisher nicht vor. Als gesichert anzunehmen ist, dass insbesondere die Leitbündel zum Flüssigkeitstransport in der Pflanze als die Teile mit dem geringsten elektrischen Widerstand so geschädigt werden, dass sie funktionsunfähig werden und die Pflanze in der Folge in Abhängigkeit vom Schadensgrad und den Wetterbedingungen eingeht und vertrocknet. Bei hohem Energieeinsatz kann es auch zur lokalen thermischen Zerstörung von Pflanzengewebe kommen.

Die Verwendung von elektrischem Gleichstrom zur Behandlung von Pflanzen ist z.B. aus der US 2,007,383 und der WO 2019 / 052591 A1 bekannt, während die Verwendung von elektrischem Gleich- oder Wechselstrom z.B. aus der WO 2018 / 095450 A1 oder der WO 2018 / 050142 A1 bekannt ist.

Aus der DE 10 2020 115 923 A1, der DE 10 2020 115 925 A1, der WO 2021 / 053 086 A1, der WO 2019 / 052 591 A1 und der WO 2020 / 182 818 A1 sind weitere Vorrichtungen zur Behandlung von Pflanzen mit elektrischem Strom bekannt.

Herkömmlicherweise werden bei dem Applizieren von elektrischem Strom auf Pflanzen zwei metallische Applikatoren verwendet, um zumindest den elektrischen Widerstand an der Kontaktstelle möglichst gering zu halten.

Derartige Applikatoren werden auch als Langapplikatoren (Langreichweitenapplikatoren, auch Zungenapplikatoren oder LRB, von englisch "Long Range Blade") bezeichnet. Derartige Applikatoren weisen z.B. einen Abstand von 0,8 m bis 1 m auf. Es können aber auch Kurzapplikatoren (SRA - für englisch: Short Range Blade) verwendet werden, deren Abstand im Bereich von 0,1 m bis 0,5 m liegt.

Weiterhin wird in einigen Fällen der Stromkreis nicht durch einen zweiten Kontakt an Pflanzen mit dem entgegengesetzten Pol, sondern durch in den Boden einschneidende Elektroden geschlossen.

Jedoch kann es im Betrieb zur Bildung von störenden Lichtbögen kommen.

Bei ungenügendem Abstand oder ungenügender Isolation zwischen zwei elektrischen Potenzialen kann es zu einem ungewollten Spannungsüberschlag kommen, in dessen Verlauf ein Lichtbogen entsteht. Unerwünschte Lichtbögen werden auch als Störlichtbögen oder auch als Fehlerlichtbögen bezeichnet. Derartige Lichtbögen setzen in der Regel die Lebensdauer von betroffenen Bauteilen massiv herab und können es im schlimmsten Fall auch zerstören. Des Weiteren sind Lichtbögen bei nicht isolierten, blanken Hochspannungsteilen eine erhebliche Gefahr, da diese bereits bei der kontaktlosen Annäherung an die beteiligten Leiter, also ohne direkte Berührung, entstehen können. Durch die große Lichtbogenleistung und hohe Temperatur des Lichtbogens wird Energie nicht wirkungseffektiv eingesetzt und brennbare Gegenstände in unmittelbarer Umgebung können Feuer fangen.

Es besteht also Bedarf daran, Wege aufzuzeigen, wie die Gefahr der Bildung von Lichtbögen reduziert werden kann.

Lichtbögen entstehen zwischen Applikatoren (Elektroden) unterschiedlicher Polarität und geringem Abstand, wie z.B. der Verwendung von Kurzapplikatoren. Darüber hinaus können Lichtbögen jeweils bei der Trennung von Applikator und Pflanze durch die Bewegung des Applikators entstehen (Abreißlichtbögen).

Die Aufgabe der Erfindung wird gelöst durch ein Verfahren zur Lichtbogenreduzierung bei Elektro-Behandlungen von Pflanzen, insbesondere während einer Sikkation von Feldfrüchten, zur Gründüngungskontrolle oder zur Kontrolle von Beikraut, mit den Schritten:
gezieltes Auftragen eines Stoffgemischs auf Pflanzen, wobei das Stoffgemisch mindestens eine einen elektrischen Übergangswiderstand im Bereich der Oberfläche der Pflanzen senkende Komponente aufweist, wobei durch das aufgetragene Stoffgemisch der elektrischen Übergangswiderstand um mindestens 5% reduzieren wird,
Beaufschlagen der Pflanzen mit elektrischem Strom,
Erfassen eines sich zwischen zwei Applikatoren gebildeten Lichtbogens,
Erfassen und Bewerten der Anzahl der erfassten Lichtbögen innerhalb einer vorbestimmten Zeitdauer und/oder bei der Elektrobehandlung einer vorbestimmten Fläche, und
Anpassen des Stoffgemischs, wenn die erfasste Anzahl der Lichtbögen eine festgelegte Häufigkeit überschreitet.

Es wurde überraschenderweise festgestellt, dass mit einer derartigen Herabsetzung des elektrischen Übergangswiderstands einer Bildung von Lichtbögen zuverlässig entgegengewirkt werden kann. Die Reduzierung des elektrischen Übergangswiderstands kann z.B. in einem Bereich von 10% bis 30% liegen. Dabei wird durch das aufgebrachte Stoffgemisch insbesondere der besonders große elektrische Widerstand der Epidermis der Pflanzen herabgesetzt. So wird elektrischer Strom direkt ins Innere der Pflanze geleitet, wo er seine maximale Wirkung entfalten kann. Dabei wird unter der Epidermis ein primäres Abschlussgewebe von Sprossachse und/oder Blättern bei Pflanzen verstanden. Die Epidermis besteht in der Regel nur aus einer Schicht von Zellen mit besonders verdickter Außenwand. Sie kann zusätzlich noch eine auf den Epidermiszellen aufliegende Wachsschicht aufweisen.

Durch die Reduzierung des elektrischen Übergangswiderstands erfolgt mit anderen Worten ein gezielter Abbau anliegender elektrischer Spannungen durch das Einleiten ins Innere der Pflanzen oder alternativ - sofern keine Pflanzen vorhanden - in das oberflächlich befeuchtete Untergrundmaterial (Erde, Schotter, Stein, Beton), sodass eine Entladung durch Bildung eines Lichtbogens unterbleibt. Gleichzeitig werden die Bedingungen für die Bildung und den Unterhalt von Lichtbögen dadurch reduziert, dass verdunstendes Wasser aus der aufgetragenen Flüssigkeit schlagartig Wärmeenergie aufnimmt, sich ausdehnt und damit auch den entstehenden oder schon gebildeten Lichtbogen aus ionisiertem Gas lokal kurzzeitig abkühlt und damit destabilisiert und löscht.

So kann die Anzahl von ungewollten Spannungsüberschlägen, begleitet von Lichtbögen zwischen zwei Applikatoren einer oder mehrerer Applikatoreinheiten signifikant reduziert werden.

Gemäß einer Ausführungsform wird ein Stoffgemisch mit einer elektrischen Leitfähigkeit verwendet, die höher als die elektrische Leitfähigkeit von Trinkwasser ist. Z.B. kann ein Stoffgemisch mit einer elektrischen Leitfähigkeit von mindestens 3000 µS/cm verwendet werden. Die elektrische Leitfähigkeit kann z.B. in einem Bereich von 3000 µS/cm bis 10000 µS/cm, in einem Bereich 4000 µS/cm bis 7000 µS/cm, oder in einem Bereich von 5000 µS/cm bis 6000 µS/cm liegen. Es wurde überraschenderweise festgestellt, dass mit einem derartigen Stoffgemisch besonders einfach und zugleich zuverlässig der elektrische Übergangswiderstand wirksam herabgesetzt und so einer Bildung von Lichtbögen entgegengewirkt werden kann.

Gemäß einer weiteren Ausführungsform wird eine elektrische Gleichspannung verwendet, um die Pflanzen mit elektrischem Strom zu beaufschlagen. Unter einer Gleichspannung wird dabei eine elektrische Spannung verstanden, bei der es zu keinem Vorzeichenwechsel kommt. Die z.B. gleichgerichtete und geglättete Spannung kann von einem Brückengleichrichter, wie einem Vollbrückengleichrichter, bereitgestellt werden, die von einem oder mehreren nachgeschalteten Glättungskondensatoren geglättet wird. Somit setzt sich die gleichgerichtete und geglättete Gleichspannung aus einem konstanten Gleichwert und einem Restwelligkeitswert additiv zusammen, wobei der Restwelligkeitswert zwischen einem Maximalwert und einem Minimalwert schwankt. Die Differenz zwischen dem Maximalwert und dem Minimalwert entspricht dann dem Spitze-Tal-Wert. Die Restwelligkeit kann Werte bis zu 20 % annehmen und im Frequenzbereich von 20 kHz bis 200 kHz, von 20 kHz bis 300 kHz, oder von 20 kHz bis 500 kHz liegen. Auf diese Weise können Pflanzen besonders energieeffizient behandelt werden.

Gemäß einer Ausführungsform wird ein Ausgangs-Stoffgemisch verwendet, das mit Wasser gemischt wird, um das auf die Pflanzen aufzutragende Stoffgemisch zu erhalten. So kann ein Stoffgemisch bereitgestellt werden, das eine höhere elektrische Leitfähigkeit hat als Trinkwasser. Mit anderen Worten, das Ausgangs-Stoffgemisch, das eine höhere elektrische Leitfähigkeit als z.B. 3000 µS/cm aufweist, wird durch Mischen mit Wasser mit einer geringeren elektrischen Leitfähigkeit verdünnt, um die gewünschte elektrische Leitfähigkeit von mindestens 3000 µS/cm einzustellen. So kann ein wasserbasiertes Stoffgemisch verwendet werden, das mit herkömmlichem Trinkwasser mit einer elektrischen Leitfähigkeit im Bereich von 300 µS/cm bis 800 µS/cm liegt. So kann ein besonders einfach herzustellendes Stoffgemisch verwendet werden.

Gemäß einer weiteren Ausführungsform weist das Stoffgemisch mindestens eine erste Komponente auf, die mindestens eine oberflächenaktive Substanz ausgewählt aus der Gruppe bestehend aus Tensiden enthält, und weist mindestens eine zweite Komponente auf, die mindestens eine viskositätserhöhende Substanz ausgewählt aus der Gruppe bestehend aus reinen Kiesel-säuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Des Weiteren kann das Stoffgemisch eine oder mehrere Komponenten aufweisen, wobei eine der Komponenten Mehrfachwirkungen aufweist, wie z.B. die Wirkung einer oberflächenaktiven Substanz und die Wirkung einer viskositätserhöhenden Substanz.

Es ist eine Verwendung eines Stoffgemischs zur Wirkungssteigerung von auf Pflanzen appliziertem elektrischem Strom vorgesehen, das mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Die Verwendung des übergangswiderstandsenkenden Stoffgemischs ermöglicht vorteilhaft einen Einsatz nicht stoffwechselchemisch, sondern auf die Blätter physikalisch-chemisch wirkender Stoffe in Kombination mit einer elektrophysikalischen Behandlung, z. B. um in einem Arbeitsgang bei einer Feldüberfahrt Unkraut oder Zwischenfrüchte abzutöten und sofort oder sehr kurzfristig neu einzusäen. Es werden Kosten und die in vielen Weltregionen knappen Wachstumstage gespart. Weiterhin erhöht sich die Wirksamkeit der Unkrautkontrolle signifikant, da die schnellkeimenden Kulturpflanzen eine wesentlich größere Möglichkeit haben, die Lichtkonkurrenz mit Unkräutern durch frühes Auflaufen zu gewinnen. Besonders vorteilhaft ist dies gegenüber bodenbewegenden Unkrautkontrollmethoden, weil beim hier beschriebenen Kombinationsverfahren keine Samen neu zur Keimung durch Licht etc. angeregt werden.

Die Verwendung des Stoffgemischs ermöglicht vorteilhaft ein Überwinden hydrophob wirkender pflanzlicher Oberflächenstrukturen und isolierender Luftspalte, wodurch die elektrische Leitfähigkeit zwischen einem elektrischen Applikator und einer Pflanze erhöht und dadurch elektrischer Strom effektiver auf die Pflanze appliziert werden kann. Die Verwendung des Stoffgemischs ermöglicht im Vergleich zu herkömmlichen Verfahren der Pflanzenvernichtung mit Herbiziden oder Strom eine kostengünstige und effektive Methode, um unerwünschte Pflanzen selektiv zu eliminieren.

Die Verwendung des Stoffgemischs ermöglicht durch die Eigenschaften des Stoffgemischs das Übertragen von elektrischem Strom auf eine Pflanze mit deutlich verringertem Widerstand gegenüber der Applikation von elektrischem Strom auf Pflanzen nur mittels fester, üblicherweise metallischer Applikatoren. Die Verwendung des Stoffgemischs ermöglicht sowohl ein widerstandsreduziertes Überwinden von den Stromfluss störenden Strukturen der Applikatoren (Unebenheiten, Anhaftungen) und der Pflanze, wie z.B. Luftschichten (verstärkt durch Haare, Blattunebenheiten, Stacheln), und auch ein effektiveres Leiten von Strom in den durchleiteten Materialien und Schichten, sodass eine systemische, pflanzenschädigende Wirkung partiell oder bis in die Wurzeln bei niedrigem Energieaufwand entsteht. Durch die Verwendung des Stoffgemischs wird somit eine Wirkungssteigerung eines stromapplizierenden Verfahrens erreicht.

Das Stoffgemisch wird auch als übergangswiderstandsenkendes Stoffgemisch oder auch als übergangswiderstandsenkendes Medium bezeichnet. Das übergangswiderstandsenkende Stoffgemisch bzw. Medium ist z.B. eine wässrige Flüssigkeit, eine viskose Flüssigkeit, eine hochviskose Flüssigkeit, ein Öl, eine hochkonzentrierte Lösung, eine thixotrope Flüssigkeit, eine Suspension, eine Emulsion, ein Feststoff oder ein Schaum, ohne auf diese Aufzählung beschränkt zu sein.

Die erste Komponente wird auch als Komponente A bezeichnet. Die oberflächenaktive Substanz aus der Gruppe der Tenside umfasst vorteilhafterweise nichtionische Tenside und ionische Tenside mit hoher biologischer Abbaubarkeit. Die oberflächenaktiven Substanzen wirken vorteilhaft beim Benetzen einer Pflanzenoberfläche. Während zwar fast alle oberflächenaktiven Substanzen eingesetzt werden können, sind Stoffklassen und Produkte mit einer hohen biologischen Abbaubarkeit und ökologischer Landwirtschaftskompatibilität bevorzugt: Naturidentische oder naturähnliche Biotenside, vorzugsweise industriell verfügbare nichtionische Zuckertenside wie Alkylpolyglucoside (APGs), Saccharoseester, andere Zuckerester, Methylglycosidester, Ethylglycosidester, N-Methylglucamide oder Sorbitanester (z. B. von Solverde), amphotere Tenside wie z. B. Cocoamidopropylbetain (CAPB) oder anionische Tenside (z. B. Natriumlaurylsulfat von Solverde).

Weitere beispielhafte Verbindungen der Komponente A werden im Folgenden genannt. Dabei sind Aufzählungen, auch der weiteren Komponenten, nicht abschließend, sondern stehen auch stellvertretend für Verbindungen mit analoger Wirkung im Sinne der Erfindung, in diesem Falle der oberflächenaktiven Wirkung:
- Nichtionische Zuckertenside:
- Alkylpolyglucoside (APGs): Die Alkylreste haben 4 bis 40 Kohlenstoffatome aller möglichen Isomere, vorzugsweise bestehen sie aus linearen Ketten mit Hauptanteilen von 8 bis 14 Kohlenstoffatomen wie sie z. B. in aus Palmöl hergestellten Fettsäurealkoholen vorkommen. Die Glucoside sind Isomere und Anomere mit 1 - 15 Zuckereinheiten, vorzugsweise Glucose mit einem Polymerisierungsgrad zwischen 1 und 5 Einheiten oder auch andere Zuckerester wie Saccharose (Saccharoseester), Sorbitane (Sorbitanester).
- Glycosidester: Ester mit Alkoholen C1-C14 alle Isomere, auch ungesättigt und zusätzlich mit Carbonsäure, Aldehydgruppen und Alkoholgruppen funktionalisiert, vorzugsweise Methyl- und Ethylglycosidester.
- N-Methylglucamide mit Kohlenstoffketten C1-C30 alle Isomere, auch ungesättigt und zusätzlich mit Carbonsäure, Aldehydgruppen und Alkoholgruppen funktionalisiert, vorzugsweise lineare Alkylketten C2-C15.
- Amphotere Tenside:
- Cocoamidopropylbetain (CAPB) mit Kohlenstoffketten C1 - C30 alle Isomere, auch ungesättigt und zusätzlich mit Carbonsäure, Aldehydgruppen und Alkoholgruppen funktionalisiert, vorzugsweise lineare Alkylketten C2-C15.
- Anionische Tenside:
   Als Beispiel für ein anionisches Tensid wird Natriumlaurylsulfat verwendet. Es können jedoch auch Gemische mit verschiedenen Alkylresten (C4-C20) der LAS (Lineare Alkylbenzolsulfonate) aber auch der SAS (Sekundäre Alkansulfonate), FAS (Fettalkoholsulfate) und Seifen verwendet werden.

Die zweite Komponente wird auch als Komponente B bezeichnet. Die viskositätserhöhende Substanz ist vorzugsweise eine thixotrope Substanz oder ein Substanzgemisch der organischen oder anorganischen rheologischen Additive. Die Substanzen der Komponente B weisen vorteilhafterweise eine hohe biologische Verträglichkeit bzw. Abbaubarkeit auf, so dass sie mit ökologischer Landwirtschaft kompatibel sind. Die unter dem Stoffgemisch genannten Substanzen bzw. Verbindungen sind beispielhaft: reine oder pyrogene Kieselsäuren, z. B. Sipernat oder Aerosil von Evonik; Mischoxide, z. B. Magnesium-Aluminiumsilikate wie Attapulgit (^{®}Attagel von BASF Formulation Additives); Magnesium-Schichtsilikate, z.B. Bentonite oder Hectorite (z. B. Optigel oder Garamite von BYK); organische Additive auf der Basis von biogenen Ölen wie z.B. Rizinusöl oder Sojaöl: z. B. Polythix von FINMA; aus dem synthetischen Bereich Polyamide, z.B. Polyacrylamide, z. B. Disparlon von King Industries; Stärke; modifizierte Cellulosen, z.B. Methylzellulose, Gummi arabicum, Carmellose-Natrium, Caragen, Carbomer, Hydroxy(m)ethylcellulose, polyanionische Cellulose, Saccharide, Tragant, vorverkleisterte Stärke oder Xanthangummi.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Die viskositätserhöhende Substanz ist vorzugsweise zugleich die den elektrischen Übergangswiderstand im Bereich der pflanzlichen Oberfläche senkende Komponente.

Vorzugsweise weist das Stoffgemisch mindestens eine weitere Komponente auf, die mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und weiteren Metallionen mit Komplexbildnern aufweist. Diese Komponente wird auch als Komponente C bezeichnet. Die besagten Substanzen und/oder Substanzgemische der Komponente C sind beispielhaft: anorganische Salze: Magnesiumsulfat, Na/K2SO4; Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von Egos; Gegenionen zu den in den Komponenten des Stoffgemischs eingesetzten Salzen: z. B. Na+, K+, Mg2+, Ca2+; Huminstoffe: z. B. Liqhumus von Humintech; chelatisiertes Eisen: z. B. Humiron von Humintech; mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen. Die Metallionen können auch von anderen Komplexbildnern aus der Gruppe der mehrzähnigen Komplexbildner komplexiert werden. Statt Eisen können andere zwei- oder dreiwertige Metallionen verwendet werden.

Bei der Frage der leitfähigkeitserhöhenden Substanzen ist zu beachten, dass es sich nur bei den anorganischen Salzen und den anorganischen Gegenionen organischer Substanzen um die klassische Erhöhung der Leitfähigkeit einer Lösung handelt. Insbesondere bei den Kohlenstoffderivaten und auch bei den höhermolekularen Huminstoffen wird die Leitfähigkeit der Blattoberflächen auch bei festen Stoffgemischen, z.B. im getrockneten Zustand eines übergangswiderstandsenkenden Mediums erhöht. Derartige Trocknungsvorgänge treten sehr schnell auf, wenn z.B. übergangswiderstandsenkende Medien mit geringer Wasserverdünnung besonders an heißen Tagen aufgetragen werden oder wenn die Flüssigkeitsfilme durch die Applikatoren größerflächig über die Blattfläche verteilt werden. Deshalb ist eine spezifische Leitfähigkeitserhöhung besonders vorteilhaft im Sinne der Erfindung.

Vorzugsweise weist das Stoffgemisch mindestens eine weitere Komponente auf, die mindestens eine hygroskopische oder verdunstungssenkende Substanz ausgewählt aus der Gruppe bestehend aus Ölen, Mikrogelen und Polyalkoholen ist. Diese Komponente wird auch als Komponente D bezeichnet. Die besagten Substanzen und/oder Substanzgemische der Komponente D sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Mikrogele: Acrylsäuregele (Superabsorber); Polyalkohole: Glycerin.

Vorzugsweise weist das Stoffgemisch mindestens eine weitere Komponente auf, die mindestens eine wachserweichende Substanz ausgewählt aus der Gruppe bestehend aus Ölen, Estern, Alkoholen, Polypeptiden und alkoxylierten Triglyceriden enthält. Diese Komponente wird auch als Komponente E bezeichnet. Die besagten Substanzen und/oder Substanzgemische der Komponente E sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Ester: Fettsäureester (Ester mit Alkoholen C1 - C10 aller Isomere, auch ungesättigt und zusätzlich mit Carbonsäure, Aldehydgruppen und Alkoholgruppen funktionalisiert), auch Fertigprodukte wie HASTEN (Fa. Vicchem), ein Rapsölethylester; alkoxylierte Triglyceride: auch als Fertigprodukt KANTOR der Firma Agroplanta.

Vorzugsweise weist das Stoffgemisch mindestens eine weitere Komponente auf, die mindestens eine physikalisch-phytotoxische Substanz und/oder wachsschichtauflösende Substanz ausgewählt aus der Gruppe bestehend aus Carbonsäuren, Terpenen, aromatischen Ölen, Alkalien, funktionalisierten Polypeptiden, anorganischen Alkalien und organischen Alkalien enthält. Diese Komponente wird auch als Komponente F bezeichnet. Unter physikalischphytotoxischen Substanzen werden hier besonders die Wachsschicht einer Pflanze unspezifisch oder spezifisch zerstörende Substanzen verstanden, sowie anderweitig phytotoxisch wirkende Substanzen. Die besagten Substanzen und/oder Substanzgemische der Komponente F sind beispielhaft: Karbonsäuren: Pelargonsäure (C9) (z. B. Pelargonsäure in Finalsan von Neudorff) oder andere verzweigte oder unverzweigte Carbonsäuren mit kürzerem (<C9), gleich langem (=C9) oder längeren (>C9) linearen oder verzweigten gesättigten oder einfach oder mehrfach ungesättigten Kohlenstoffketten (z. B. Capronsäure, Caprylsäure und Caprinsäure). Diese Kohlenstoffketten können durch weitere funktionale Gruppen wie Alkohole, Aldehyde oder Carbonsäuregruppen einfach oder mehrfach zusätzlich funktionalisiert sein. Terpene: terpenhaltige Öle; aromatische Öle: Citronellöl (auch Fertigprodukte von Barrier/UK), Eugenol z. B. aus Gewürznelkenöl (auch Fertigprodukte wie Skythe /USA), Pinienöl (auch Fertigprodukte der Firma Sustainableformulations), Pfefferminzöle (z. B. Biox-M von Certis); Alkalien: anorganische Alkalien (z.B. NaOH, KOH) oder organische Alkalien (z. B. Salze von Fettsäuren oder Huminsäuren z. B. Liqhumus von Humintech).

Die Komponente E kann ebenfalls zur Zerstörung der Wachsschicht (d.h. als Komponente F) eingesetzt werden. Dazu muss die Komponente E ausreichend heiß sein. Vorzugsweise werden hochsiedende organische Substanzen mit geringem Wasseranteil oder ohne Wasseranteil eingesetzt. Ein heißes Öl ist besonders bevorzugt.

Vorzugsweise weist das Stoffgemisch mindestens eine weitere Komponente zur Haftungsverstärkung auf, die mindestens eine haftungsfördernde Substanz und/oder mindestens eine haftungsverstärkende Substanz enthält. Die haftungsfördernde Substanz ist ausgewählt aus der Gruppe der Schaumbildner bestehend aus Tensiden, Proteinen und deren Derivaten. Die haftungsverstärkende Substanz (indem die Viskosität weiter erhöht wird) ist ausgewählt aus der Gruppe bestehend aus organischen rheologischen Additiven, anorganischen rheologischen Additiven (vorzugsweise mit hoher biologischer Verträglichkeit), reinen Kieselsäuren, pyrogenen Kieselsäuren, Mischoxiden, Magnesium-Schichtsilikaten, organischen Additiven auf der Basis von biogenen Ölen und deren Derivaten, und Polyamiden. Diese Komponente wird auch als Komponente G bezeichnet. Die Komponente G bewirkt dabei ein eingeschränktes Bewegen bzw. Verteilen des Stoffgemischs auf einer entsprechenden Pflanze bzw. mehreren, dichtstehenden Pflanzen.

Die Tenside können nichtionische oder anionische Tenside sein, z.B. Schaummarkierungsmittel von Kramp oder Proteinschaumbildner der Firma Dr. Sthamer. Von den weiteren haftungsverbessernden Substanzen und/oder Substanzgemischen der Komponente G sind beispielhaft: reine oder pyrogene Kieselsäuren: Sipernat oder Aerosil von Evonik; Mischoxide: Magnesium-Aluminiumsilikate, z.B. Attapulgit (^{®}Attagel von BASF Formulation Additives); Magnesium-Schichtsilikate; Bentonite oder Hectorite (z. B Optigel oder Garamite von BYK); organische Additive auf der Basis von biogenen Ölen wie z.B. Rizinusöl oder Sojaöl: Polythix von FINMA; Polyamide: Disparlon von King Industries.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Vorzugsweise weist das Stoffgemisch mindestens eine weitere Komponente auf, die mindestens eine ionisierungsfördernde Substanz ausgewählt aus der Gruppe bestehend aus anorganischen Salzen, Kohlenstoff, Huminstoffen, chelatisiertem Eisen und anderen chelatisierten Metallionen enthält. Diese Komponente wird auch als Komponente H bezeichnet. Von den weiteren Substanzen und/oder Substanzgemischen der Komponente H sind beispielhaft: anorganische Salze: Na/K2SO4 oder andere, Gegenionen zu eingesetzten Salzen von organischen Säuren (Na+, K+); Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von Egos; Huminstoffe: Liqhumus von Humintech; chelatisiertes Eisen: Humiron von Humintech, mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen.

Vorzugsweise weist das Stoffgemisch mindestens eine weitere Komponente auf, die mindestens eine Trägerflüssigkeit ausgewählt aus der Gruppe bestehend aus Wasser, organischen Flüssigkeiten, Pflanzenölen, Estern von Pflanzenölen und Fettsäureestern enthält. Diese Komponente wird auch als Komponente I bezeichnet. Die Trägerflüssigkeiten sind vorteilhaft zum Verdünnen des Stoffgemischs geeignet. Von den Substanzen und/oder Substanzgemischen der Komponente I sind beispielhaft: Organische Flüssigkeiten: Pflanzenöle; Ester von Pflanzenölen (Ester mit Alkoholen C1 - C10 alle Isomere, auch ungesättigt und zusätzlich mit Carbonsäure, Aldehydgruppen und Alkoholgruppen funktionalisiert) und Fettsäureester (Ester von Fettsäuren mit C4 - C30, dabei alle Isomere, auch ungesättigter Fettsäuren mit Alkoholen mit C1 - C10, dabei alle Isomere, auch ungesättigt und zusätzlich mit Carbonsäure, Aldehydgruppen und Alkoholgruppen funktionalisiert).

Vorzugsweise weist das Stoffgemisch mindestens eine weitere Komponente auf, die mindestens eine die Lagerfähigkeit oder eine Tankmischung stabilisierende Substanz enthält. Diese Komponente wird auch als Komponente J bezeichnet. Die Substanzen und/oder Substanzgemische der Komponente J sind beispielhaft Emulgatoren wie Poloxamer (BASF), mittelkettige Triglyceride und/oder Biozide, dabei bevorzugt Stoffe mit hoher biologischer Abbaubarkeit.

Wie aus den beschriebenen Komponenten hervorgeht, gibt es einige Substanzen, die eine Mehrfachfunktion erfüllen, d.h. unter verschiedenen Komponenten Verwendung finden können, und deshalb bevorzugt eingesetzt werden. Insbesondere zu nennen sind hierbei Huminstoffe, Pflanzenöle und ihre Ester (Ester mit Alkoholen C1 - C25 aller Isomere, auch ungesättigt und zusätzlich mit Carbonsäure, Aldehydgruppen und Alkoholgruppen funktionalisiert, vorzugsweise Fettalkohole aus natürlichen Quellen), und leitfähigkeitserhöhende Komponenten.

Vorteilhafterweise wird das Stoffgemisch in Abhängigkeit vom Anwendungsziel aus den bevorzugten Komponenten zusammengestellt (in Klammern werden fakultative Komponenten genannt, die je nach Anwendungsziel vorteilhaft hinzugefügt werden können):
a) Anwendungsziel Benetzung: Mischungen der Stoffgruppen A + B (+C/D/H/I/J);
b) Anwendungsziel spezifische Erhöhung der Leitfähigkeit der Oberfläche: Mischungen der Stoffgruppen A + B + C (+D/H/I/J);
c) Anwendungsziel Aufweichung der Wachsschicht: Mischungen der Stoffgruppen A + B + E (+C/D/H/I/J);
d) Anwendungsziel Zerstörung der Wachsschicht: Mischungen der Stoffgruppen A + B + F (+C/D/H/I/J);
e) Anwendungsziel Überbrückung von Widerständen: Mischungen der Stoffgruppen A + B + G (+C/D/H/I/J);
f) Komponente H wird nur eingesetzt, wenn die elektrostatische Aufladung von Pflanzen und Medium genutzt werden kann;
g) Andere Kombinationen von A + B mit den Komponenten C/D/E/F/G/H/I/J können zum Bewirken von Kombinationseffekten zum Erhöhen der Effektivität eingesetzt werden.

Vorteilhaft für die Zerstörung der Wachsschicht vor oder bei der elektrophysikalischen Behandlung ist die Zerstörung mit erhitzten Medien generell und insbesondere mit heißem Öl (in Komponente E) in den Bereichen, die mit den elektrischen Applikatoren in Berührung kommen. Das dafür nötige dosierte Aufsprühen von geringen Mengen heißem Öl (0,5 - 20 l/ha, vorzugsweise 2 - 10 l/ha) nur auf die oberen Blattbereiche verringert die Aufwandmenge gegenüber der reinen (bekannten) Abtötung der Pflanzen durch heißes Öl stark, weil die elektrophysikalische Behandlung bei geringem Widerstand dann systemisch wirkt.

Vorzugsweise weist das Stoffgemisch neben der ersten Komponente (Komponente A) und der zweiten Komponente (Komponente B) mindestens eine weitere Komponente auf, wobei die weitere Komponente die Komponente C, die Komponente E und/oder die Komponente F ist. Die Komponenten C, E und F sind sowohl jede für sich als auch in Kombination besonders effektiv, um den elektrischen Übergangswiderstand im Bereich der pflanzlichen Oberfläche zu senken. Der Übergangswiderstand wird durch die Leitfähigkeitserhöhung in Schichten im Bereich der pflanzlichen Oberfläche (Komponente C), durch das Erweichen (Aufweichen) der Schichten im Bereich der pflanzlichen Oberfläche (Komponente E) und/oder durch das Auflösen (Zerstören) der Schichten im Bereich der pflanzlichen Oberfläche (Komponente F) gegenüber einer Behandlung ohne das Stoffgemisch signifikant verringert.

Als Komponente C weist das Stoffgemisch vorzugsweise Huminstoffe und/oder chelatisiertes Eisen auf, wobei das chelatisierte Eisen bevorzugt durch Huminsäuren chelatisiertes Eisen ist. Als Komponente F weist das Stoffgemisch vorzugsweise Fettsäuren, Gemische von Fettsäuren und/oder alkalisierte Huminstoffe auf, wobei die Fettsäuren bevorzugt in alkalisierter und/oder chelatisierter Form vorliegen.

Besonders bevorzugt weist das Stoffgemisch neben der ersten Komponente (Komponente A) und der zweiten Komponente (Komponente B) mindestens eine weitere Komponente auf, wobei die weitere Komponente die Komponente C und/oder die Komponente E ist.

Vorzugsweise weist das Stoffgemisch neben der ersten Komponente (Komponente A) und/oder der zweiten Komponente (Komponente B) mindestens eine weitere Komponente auf, wobei die weitere Komponente die Komponente C, die Komponente D und/oder die Komponente E ist.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens eine Komponente A und eine Komponente C aufweist,
wobei die Komponente A mindestens eine oberflächenaktive Substanz ausgewählt aus der Gruppe bestehend aus Tensiden enthält, und
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält.

Vorzugsweise weist das Stoffgemisch der offenbarten Verwendung mindestens eine weitere Komponente auf, wobei die weitere Komponente ausgewählt ist aus der Gruppe bestehend aus einer Komponente B, einer Komponente D, einer Komponente E, einer Komponente F, einer Komponente G, einer Komponente H, einer Komponente I und einer Komponente J.

Die Komponenten A, B, C, D, E, F, G, H, I und J des Stoffgemischs der offenbarten Verwendung entsprechen den Komponenten A, B, C, D, E, F, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, C, D, E, F, G, H, I und J gelten für das Stoffgemisch der offenbarten Verwendung daher gleichermaßen.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens eine Komponente B und eine Komponente C aufweist,
wobei die Komponente B mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält, und
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält.

Vorzugsweise weist das Stoffgemisch der offenbarten Verwendung mindestens eine weitere Komponente auf, wobei die weitere Komponente ausgewählt ist aus der Gruppe bestehend aus einer Komponente A, einer Komponente D, einer Komponente E, einer Komponente F, einer Komponente G, einer Komponente H, einer Komponente I und einer Komponente J.

Die Komponenten A, B, C, D, E, F, G, H, I und J des Stoffgemischs der offenbarten Verwendung entsprechen den Komponenten A, B, C, D, E, F, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, C, D, E, F, G, H, I und J gelten für das Stoffgemisch der offenbarten Verwendung daher gleichermaßen.

Offenbart ist weiterhin eine Verwendung eines Stoffgemischs zur Wirkungssteigerung von auf Pflanzen appliziertem elektrischem Strom, wobei das Stoffgemisch mindestens eine den elektrischen Übergangswiderstand im Bereich der pflanzlichen Oberfläche senkende Komponente aufweist, wobei das Stoffgemisch mindestens zwei Komponenten ausgewählt aus der Gruppe bestehend aus einer Komponente C, einer Komponente E und einer Komponente F aufweist,
wobei die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern enthält,
wobei die Komponente E mindestens eine wachserweichende Substanz ausgewählt aus der Gruppe bestehend aus Ölen, Estern, Alkoholen, Polypeptiden und alkoxylierten Triglyceriden enthält, und
wobei die Komponente F mindestens eine physikalisch-phytotoxische und/oder wachsschichtauflösende Substanz ausgewählt aus der Gruppe bestehend aus Karbonsäuren, Terpenen, aromatischen Ölen, Alkalien, funktionalisierten Polypeptiden, anorganischen Alkalien und organischen Alkalien enthält.

Die Komponenten C, E und F des Stoffgemischs der offenbarten Verwendung entsprechen den Komponenten C, E und F des oben beschriebenen Stoffgemischs für die erfindungsgemäße Verwendung. Die für das Stoffgemisch der erfindungsgemäßen Verwendung beschriebenen Merkmale und Beispiele der Komponenten C, E und F gelten für das Stoffgemisch der offenbarten Verwendung daher gleichermaßen.

Vorzugsweise weist das Stoffgemisch der offenbarten Verwendung entweder die Komponente C und die Komponente E oder die Komponente C und die Komponente F auf.

Vorzugsweise weist das Stoffgemisch der offenbarten Verwendung mindestens eine weitere Komponente auf, wobei die weitere Komponente ausgewählt ist aus der Gruppe bestehend aus einer Komponente A, einer Komponente B, einer Komponente D, einer Komponente G, einer Komponente H, einer Komponente I und einer Komponente J.

Die Komponenten A, B, D, G, H, I und J des Stoffgemischs der offenbarten Verwendung entsprechen den Komponenten A, B, D, G, H, I und J des oben beschriebenen Stoffgemischs für die erfindungsgemäße Verwendung. Die für das Stoffgemisch der erfindungsgemäßen Verwendung beschriebenen Merkmale und Beispiele der Komponenten A, B, D, G, H, I und J gelten für das Stoffgemisch der offenbarten Verwendung daher gleichermaßen.

Des Weiteren ist vorgesehen, bei Elektro-Behandlungen von Pflanzen, insbesondere während einer Sikkation von Feldfrüchten, zur Gründüngungskontrolle oder zur Kontrolle von Beikraut, zumindest den Schritt
Beaufschlagen von Pflanzen mit einer elektrischen Spannung mit einem Spitze-Tal-Wert kleiner 1000 V
durchzuführen.

Dabei wird unter dem Spitze-Tal-Wert (früher Spitze-Spitze-Wert) die Schwankungsbreite der elektrischen Spannung vom niedrigsten Wert (einschließlich negativer Werte) bis zum höchsten Wert während einer Periode verstanden. Mit anderen Worten, sie entspricht der Differenz zwischen einem Maximalwert und einem Minimalwert der elektrischen Spannung.

Es wurde überraschenderweise festgestellt, dass, wenn der Spitze-Tal-Wert kleiner 1000 V ist, die Anzahl von ungewollten Spannungsüberschlägen, begleitet von Lichtbögen zwischen zwei Applikatoren mit unterschiedlichem Potential, die sich in einer Applikatoreinheit oder in Applikatoreinheiten befinden, signifikant reduziert werden kann.

So wird es möglich, eine Mehrzahl von Applikatoren gestaffelt in einer Applikatorreihe anzuordnen und ohne ungewollte Spannungsüberschläge und/oder Lichtbögen zu betreiben. Außerdem wird es so möglich, eine Mehrzahl von Applikatoreinheiten in Fahrtrichtung nebeneinander oder hintereinander in einer Applikatorreihe anzuordnen. Dies erlaubt eine gezielt nur in die Pflanzensprosse oder nur flach in den Boden wirkende ElektroBehandlung von Pflanzen mit einer Mehrzahl von Applikatoren in einer Applikatoreinheit mit reduziertem Abstand voneinander.

Vorzugsweise ist die elektrische Spannung eine Wechselspannung. Unter einer Wechselspannung wird dabei eine elektrische Spannung verstanden, bei der es innerhalb einer Periode der Wechselspannung zu einem Vorzeichenwechsel kommt. Mit anderen Worten, während einer ersten Halbwelle sind die Spannungswerte z.B. positiv, während sie während einer zweiten Halbwelle negativ sind. Die Form der elektrischen Wechselspannung kann z.B. sinusförmig, rechteckförmig, dreieckförmig, z.B. sägezahnförmig, oder auch trapezförmig sein. Die Wechselspannung kann symmetrisch sein. Dann sind die Beträge eines Maximalwertes und eines Minimalwertes der Wechselspannung gleich groß und entsprechen der Amplitude der Wechselspannung. Der Spitze-Tal-Wert entspricht dann der doppelten Amplitude der Wechselspannung. Ferner kann die Wechselspannung auch unsymmetrisch sein. Mit anderen Worten, eine symmetrische Wechselspannung wurde additiv mit einer konstanten Gleichspannung überlagert, sodass das Ergebnis eine unsymmetrische Wechselspannung ist. Dabei können der Maximalwert und der Minimalwert beide positiv, der Maximalwert positiv und der Minimalwert negativ, oder der Maximalwert und der Minimalwert beide negativ sein. Das Pendeln zwischen dem Maximalwert und dem Minimalwert kann mit einer festen Frequenz oder mit einer variablen Frequenz, wie bei einem frequenzmodulierten Signal, erfolgen. So kann die Anzahl von ungewollten Spannungsüberschlägen, begleitet von Lichtbögen, z.B. zwischen zwei Applikatoren einer Applikatoreinheit, insbesondere zwischen Applikatoren benachbarter Applikatoreinheiten, signifikant reduziert werden, wenn als elektrische Spannung eine derartige Wechselspannung verwendet wird.

Vorzugsweise ist die elektrische Spannung eine gleichgerichtete und geglättete Gleichspannung. Unter einer Gleichspannung wird dabei eine elektrische Spannung verstanden, bei der es zu keinem Vorzeichenwechsel kommt. Die gleichgerichtete und geglättete Spannung kann von einem Brückengleichrichter, wie einem Vollbrückengleichrichter, bereitgestellt werden, die von einem oder mehreren nachgeschalteten Glättungskondensatoren geglättet wird. Somit setzt sich die gleichgerichtete und geglättete Gleichspannung aus einem konstanten Gleichwert und einem Restwelligkeitswert additiv zusammen, wobei der Restwelligkeitswert zwischen einem Maximalwert und einem Minimalwert schwankt. Die Differenz zwischen dem Maximalwert und dem Minimalwert entspricht dann dem Spitze-Tal-Wert. Die Restwelligkeit kann Werte bis zu 20 % annehmen und im Frequenzbereich von 20 kHz bis 200 kHz, von 20 kHz bis 300 kHz, oder von 20 kHz bis 500 kHz liegen. So kann die Anzahl von ungewollten Spannungsüberschlägen, begleitet von Lichtbögen zwischen zwei Applikatoren einer Applikatoreinheit, insbesondere zwischen benachbarten unterschiedlich gepolten Applikatoren einer Applikatoreinheit, signifikant reduziert werden, wenn als elektrische Spannung eine derartig gleichgerichtete und geglättete Gleichspannung verwendet wird.

Vorzugsweise ist die elektrische Spannung eine gepulste Gleichspannung. Dabei wird unter einer gepulsten Gleichspannung eine elektrische Spannung verstanden, bei der es zu keinem Vorzeichenwechsel kommt, die Höhe der elektrischen Gleichspannung aber zwischen einem Maximalwert und einem Minimalwert pendelt. Die gepulste Gleichspannung kann symmetrisch sein. Dann sind die Beträge eines Maximalwertes und eines Minimalwertes der gepulsten Gleichspannung gleich groß und entsprechen der Amplitude der gepulsten Gleichspannung. Der Spitze-Tal-Wert entspricht dann der doppelten Amplitude der gepulsten Gleichspannung. Das Pendeln zwischen dem Maximalwert und dem Minimalwert kann mit einer festen Frequenz oder mit einer variablen Frequenz, wie bei einem pulsweitenmodulierten Signal (PWM-Signal), erfolgen. Die Form der elektrischen Gleichspannung kann z.B. rechteckförmig, dreieckförmig, z.B. sägezahnförmig, oder auch trapezförmig sein. So kann die Anzahl von ungewollten Spannungsüberschlägen, begleitet von Lichtbögen zwischen zwei Applikatoren mit unterschiedlichem Potential, die sich in einer Applikatoreinheit oder in Applikatoreinheiten befinden, signifikant reduziert werden, wenn als elektrische Spannung eine derartig gepulste Gleichspannung verwendet wird.

Vorzugsweise weist die elektrische Spannung einen Minimalwert größer Null auf. Eine derartige elektrische Spannung kann als unsymmetrisch gepulste Gleichspannung aufgefasst werden. Mit anderen Worten, eine symmetrische, gepulste Gleichspannung wurde additiv mit einer konstanten Gleichspannung überlagert, sodass das Ergebnis eine unsymmetrisch gepulste Gleichspannung ist. Dabei können der Maximalwert und der Minimalwert beide positiv, der Maximalwert positiv und der Minimalwert negativ, oder der Maximalwert und der Minimalwert beide negativ sein. So kann die Anzahl von ungewollten Spannungsüberschlägen, begleitet von Lichtbögen zwischen zwei Applikatoren einer Applikatoreinheit, insbesondere zwischen Applikatoren benachbarter Applikatoreinheiten, signifikant reduziert werden, wenn als elektrische Spannung eine derartig unsymmetrisch gepulste Gleichspannung verwendet wird.

Ferner gehören zur Erfindung eine Behandlungs-Vorrichtung, ein Trägerfahrzeug, wie eine selbstfahrende Landmaschine oder ein Anhänger eines Gespanns, mit einer derartigen Behandlungs-Vorrichtung und ein Bausatz, enthaltend Komponenten einer derartigen Behandlungs-Vorrichtung.

Es wird nun die Erfindung anhand der Figuren erläutert. Es zeigen:
- Figur 1: in schematischer Darstellung eine Seitenansicht einer Ausführungsform eines Trägerfahrzeugs mit einer Behandlungs-Vorrichtung zur Behandlung von Pflanzen.
- Figur 2: in schematischer Darstellung eine Draufsicht des in Figur 1 gezeigten Trägerfahrzeugs mit einer Auswerte-Vorrichtung zur Biomassen-Bestimmung.
- Figur 3: in schematischer Darstellung einen Verfahrensablauf zum Betrieb des in den Figuren 1 und 2 gezeigten Trägerfahrzeugs.

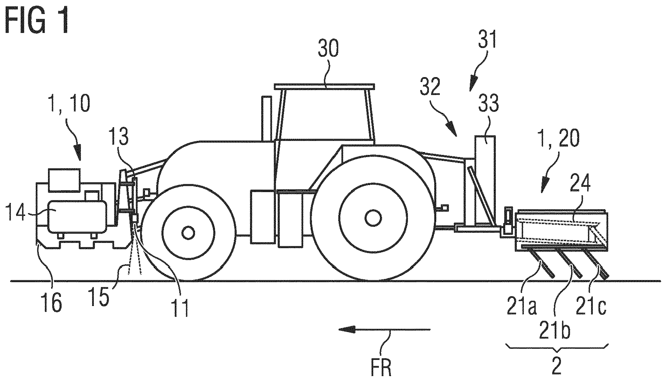

Es wird zunächst auf die Figur 1 Bezug genommen.

In Fig. 1 ist eine Anordnung einzelner Komponenten einer Behandlungs-Vorrichtung 1 zur Behandlung von Pflanzen an einer als Trägerfahrzeug 30 dienenden Landmaschine dargestellt.

Mit der Behandlungs-Vorrichtung 1 kann z.B. eine Sikkation oder allgemein Kontrolle/Abtötung durch Beaufschlagen von Pflanzen mit elektrischem Strom bewirkt werden. Dabei kann vorgesehen sein, vor dem Beaufschlagen mit elektrischem Strom elektrische Übergangswiderstände durch vorheriges Aufbringen eines übergangswiderstandsenkenden Mediums 15, wie z.B. einer entsprechenden Flüssigkeit, zu reduzieren.

Landmaschinen sind spezialisierte Maschinen, die vorwiegend in der Landwirtschaft eingesetzt werden. Sie können selbstfahrend ausgebildet sein oder von einem landwirtschaftlichen Zugfahrzeug, wie z.B. einem Traktor, gezogen oder an diesen fest angebaut werden. Mit anderen Worten, bei der Landmaschine kann es sich um ein Zugfahrzeug mit eigenem Antrieb oder um einen Anhänger ohne eigenen Antrieb, der von einem Zugfahrzeug gezogen wird, handeln.

Im vorliegenden Ausführungsbeispiel ist das Trägerfahrzeug 30 als Traktor ausgebildet. Abweichend vom vorliegenden Ausführungsbeispiel kann das Trägerfahrzeug 30 auch als Dünge-, Saat- oder Erntemaschine ausgebildet sein, die durch Anbringen der Komponenten der Behandlungs-Vorrichtung 1 modifiziert wurde. Hierzu können die Komponenten der Behandlungs-Vorrichtung 1 auch in Form eines Bausatzes bereitgestellt werden. Z.B. kann der Bausatz Komponenten eines als Anbaugerät ausgebildeten Behandlungs-Vorrichtung 1 aufweisen.

Die Behandlungs-Vorrichtung 1 und das Trägerfahrzeug 30 können je nach Einsatzmodus und speziellen Anforderungen der betreffenden Feldfrucht und des Behandlungszeitpunktes unterschiedlich sein.

Die Behandlungs-Vorrichtung 1 kann ein oder mehrere Module 10, 20 aufweisen, die jeweils als Anbaugerät ausgebildet sein können. Die Behandlungs-Vorrichtung 1 kann als Maschine/Agrarmaschine ausgebildet sein, d.h. als auswechselbare Ausrüstung, bestehend aus bis zu zwei Anbaugeräten, welche gleichzeitig am Trägerfahrzeug 30 montiert sind. Ferner kann die Behandlungs-Vorrichtung 1 als auswechselbare Ausrüstung ausgebildet sein, d.h. als eine Vorrichtung, die der Fahrer des Trägerfahrzeugs 30 nach deren Inbetriebnahme selbst an ihr anbringt, um ihre Funktion zu ändern oder zu erweitern, sofern diese Ausrüstung kein Werkzeug ist.

Im vorliegenden Ausführungsbeispiel weist die Behandlungs-Vorrichtung 1 ein erstes Modul 10 zum Auftragen des übergangswiderstandsenkenden Mediums 15 und ein zweites Modul 20 zum Übertragen von elektrischem Gleichstrom auf Pflanzen auf. Durch das Auftragen des übergangswiderstandsenkenden Mediums 15 können Übergangswiderstände, z.B. zwischen Applikatoren und kontaktierten Pflanzenteilen, reduziert werden. Ferner wird die Neigung zur Lichtbogenbildung reduziert, was den Energieverbrauch reduziert.

Abweichend vom vorliegenden Ausführungsbeispiel kann die Behandlungs-Vorrichtung 1 aber auch nur ein zweites Modul 20 zum Übertragen von elektrischem Strom auf die Pflanzen aufweisen. Ferner kann vorgesehen sein, dass z.B. bei einem Gespann, bestehend aus einem Zugfahrzeug und einem von dem Zugfahrzeug gezogenen Anhänger, das erste Modul 10 dem Zugfahrzeug und Komponenten des zweiten Moduls 20 dem Zugfahrzeug und dem Anhänger zugeordnet sind. Auch können die Komponenten des zweiten Moduls 20 nur dem Anhänger zugeordnet sein. Des Weiteren können die Komponenten des ersten Moduls 10 und des zweiten Moduls 20 dem Anhänger zugeordnet sein.

Das übergangswiderstandsenkende Medium 15 ist in diesem Ausführungsbeispiel eine übergangswiderstandsenkende Flüssigkeit.

In Tabelle 1 sind wasserbasierte übergangswiderstandsenkende Medien 15 zusammengefasst. Diese sind besonders zur Verwendung auf zweikeimblättrigen Pflanzen vorgesehen.

**Tabelle 1**

| Kom ponentenname | Funktion | Einzustellende Aufwandmeng e allgemein kg/ha Stoffklasse nach Liste Komponenten name | Einzustellende Aufwandmenge bevorzugt kg/ha bevorzugte Stoffklassen | Einzustellende Aufwandmeng e Speziell kg/ha bevorzugte Stoffklasse |
|---|---|---|---|---|
| A | Tensid | 0--4 | 0 - 2 APGs, Zuckerester, CAPB | 0,2 - 0,5 Zuckerester, CAPB |
| B | Verdicke r | 0 - 5 | 0 - 3 Kieselsäuren Mischoxidsilikate Schichtsilikate, mod. Zellulosen | 0-2 Kieselsäuren Mischoxidsilika te Schichtsilikate |
| C | Leitfähig keitserhöher | 1 -10 | 1 - 10 Sulfate, Huminstoffe, chelatisiertes Eisen (GLDA) | 1 -10 Huminstoffe, chelatisiertes Eisen, mit Huminsäuren chelatisiert, alkalisiert |
| D | Verdunstungssenkend | 0,1 - 10 | 0,1 -5 Pflanzenöle/Pflanz enölester | 0,1 - 2 Pflanzenöle |
| E | Wachsschichterweichend | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0 - 40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0-10, nichttoxische Carbonsäuren, Eisenhaltige Metallseifen, alkalisierte Huminstoffe |

In Tabelle 2 sind ölbasierte übergangswiderstandsenkende Medien 15 zusammengefasst. Diese sind hauptsächlich zur Verwendung auf zweikeimblättrigen Pflanzen vorgesehen.

**Tabelle 2**

| Komponentenname | Funktion | Einzustellende Aufwandmeng e allgemein kg/ha Stoffklasse nach Liste Komponentenname | Einzustellende Aufwandmeng e bevorzugt kg/ha bevorzugte Stoffklassen | Einzustellende Aufwandmenge Speziell kg/ha bevorzugte Stoffklasse |
|---|---|---|---|---|
| A | Tensid | 0-2 | 0 - 1 APGs, Zuckerester, CAPB | 0-0,2 Zuckerester, CAPB |
| B | Verdicker | 0-2 | 0-2 Kieselsäuren Mischoxidsilika te Schichtsilikate, mod. Zellulosen | 0-1 Kieselsäuren Mischoxidsilikate Schichtsilikate, Zellulose |
| C | Leitfähigke itserhöher | 1-10 | 1 - 10 Sulfate, Huminstoffe, chelatisiertes Eisen (GLDA) | 1 -10 Huminstoffe, chelatisiertes Eisen, mit Huminsäuren chelatisiert, alkalisiert |
| D | Hygroskopische Substanze n | 0,1 - 10 | 0,1 - 5 Glycerin, Mikrogele | 0,1 - 2 Glycerin |
| E | Wachsschichterw eicher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0-40 | 0-20 Fettsäuren, (Pelargonsäure nur in Dosierungen 0 - 50 % der in PSM zulässigen Mengen für die jeweilige Kultur) | 0-10, nichttoxische Carbonsäuren, |
| | | | | Eisenhaltige Metallseifen, alkalisierte Huminstoffe |
| | | | Terpenöle, alkalisierte Huminstoffe, Eisenhaltige Metallseifen | |

In Tabelle 3 sind übergangswiderstandsenkende Medien 15 für Tröpfchenapplikationen zusammengefasst. Diese sind hauptsächlich zur Verwendung auf Gräsern vorgesehen.

**Tabelle 3**

| Kompon entenna me | Funktion | Einzustellend e Aufwandmenge allgemein kg/ha Stoffklasse nach Liste Komponenten name | Einzustellende Aufwandmeng e bevorzugt kg/ha bevorzugte Stoffklassen | Einzustellende Aufwandmenge Speziell kg/ha bevorzugte Stoffklasse |
|---|---|---|---|---|
| A | Tensid | 0-3 | 0 - 2 APGs, Zuckerester, CAPB | 0,2 - 0,5 Zuckerester, CAPB |
| B | Verdicker | 0-10 | 0-5 Kieselsäuren Mischoxidsilik ate Schichtsilikate, mod. Zellulosen | 1 -5 Kieselsäuren Mischoxidsilikate Schichtsilikate, mod. Zellulosen |
| C | Leitfähigkeitserhöher | 1 -10 | 1 - 10 Sulfate, Huminstoffe, chelatisiertes Eisen (GLDA) | 1 -10 Huminstoffe, chelatisiertes Eisen, mit Huminsäuren chelatisiert, alkalisiert |
| D | Verdunstungssenkende Substanzen | 0,1 - 10 | 0,1 - 5 Pflanzenöle/Pf lanzenölester | 0,1 - 2 Pflanzenöle |
| E | Wachsschichterwei cher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerst örer | 0-40 | 0-20 Fettsäuren, (Pelargonsäur e nur in Dosierungen 0 - 50 % der in PSM zulässigen Mengen für die jeweilige Kultur) Terpenöle, alkalisierte Huminstoffe, Eisenhaltige Metallseifen | 0-10, nichttoxische Carbonsäuren, Eisenhaltige Metallseifen, alkalisierte Huminstoffe |

In Tabelle 4 sind übergangswiderstandsenkende Medien 15 für schaumbasierte Applikationen zusammengefasst. Diese sind hauptsächlich zur Verwendung auf Gräsern vorgesehen.

**Tabelle 4**

| Kompon entenna me | Funktion | Einzustellend e Aufwandmenge allgemein kg/ha Stoffklasse nach Liste Komponenten name | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0-4 | 0 - 2 APGs, Zuckerester, CAPB | 0,2 - 0,5 Zuckerester, CAPB |
| B | Verdicker | 0-2 | 0-2 Kieselsäuren Mischoxidsilikat e Schichtsilikate, mod. Zellulosen | 0-2 Kieselsäuren Mischoxidsilikat e Schichtsilikate |
| C | Leitfähigkeitserhöher | 1 -10 | 1 - 10 Sulfate, Huminstoffe, chelatisiertes Eisen (GLDA) | 1 -10 Huminstoffe, chelatisiertes Eisen, mit Huminsäuren chelatisiert, alkalisiert |
| D | Verdunstungssenkend | 0,1 - 10 | 0,1 - 5 Pflanzenöle/Pfla nzenölester Glycerin, Mikrogele | 0,1 - 2 Pflanzenöle Glycerin |
| E | Wachsschichterweicher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0-40 | 0-20 Fettsäuren, (Pelargonsäure nur in Dosierungen 0 - 50 % der in PSM zulässigen Mengen für die jeweilige Kultur) | 0-10, nichttoxische Carbonsäuren, |
| | | | | Eisenhaltige Metallseifen, alkalisierte Huminstoffe |
| | | | Terpenöle, alkalisierte Huminstoffe, Eisenhaltige Metallseifen | |
| G | Schaumaddi tive | 0-2 | 0-1 | 0-1 |

Im vorliegenden Ausführungsbeispiel sind das erste Modul 10 an der Frontseite und das zweite Modul 20 an der Rückseite des Trägerfahrzeugs 30 angeordnet. Diese Anordnung ermöglicht es, dass das Aufbringen des übergangswiderstandsenkenden Mediums 15 immer vor oder gleichzeitig mit der elektrophysikalischen Behandlung durch Beaufschlagen mit elektrischem Strom, wie z.B. elektrischem Gleichstrom, stattfinden kann.

Das erste Modul 10 weist mindestens eine Auftragseinrichtung auf, die als Düse 11 ausgebildet ist. In Kombination mit der Düse 11 kann die Auftragseinrichtung auch einen Abstreifer (nicht dargestellt), oder alternativ selbst als Abstreifer ausgebildet sein. Die Auftragseinrichtung ist damit zum Sprühen und Abstreifen bzw. Aufbringen des übergangswiderstandsenkenden Mediums 15 ausgebildet, oder alternativ auch zum Sprühen oder Abstreifen. Das erste Modul 10 weist dabei eine Anzahl von gemeinsam oder vorzugsweise einzeln steuerbaren Düsen 11 oder Abstreifern auf, die an einer ersten Trägerkonstruktion 13 in einer gewünschten Gesamtarbeitsbreite der Behandlungs-Vorrichtung 1 (z.B. 3 - 48 m, vorzugsweise 6 - 27 m) und Geometrie (statisch oder flexibel gelagert oder in der Höhe sensorgesteuert) angeordnet sind. Die Düsen 11 und/oder Abstreifer werden mit dem übergangswiderstandsenkenden Medium 15, im vorliegenden Ausführungsbeispiel eine Flüssigkeit, versorgt, die in einem oder mehreren Flüssigkeitsbehältern 14 bevorratet wird. Sensoren 16 sind u.a. im Bereich der Düsen 11 angeordnet (nicht dargestellt), deren Daten bei Bedarf zum Steuern der Menge des Auftrags des übergangswiderstandsenkenden Mediums 15 verwendet werden. Weitere Sensoren 16 können an der Vorderseite des ersten Moduls 10 (d.h. in Fahrtrichtung FR) zum Zwecke der Arbeitssicherheit angeordnet sein. Als Sensoren werden z.B. Strom/Spannungssensoren, optische Sensoren, z.B. Kamerasysteme, Lage- oder Bewegungssensoren, LIDAR, Metalldetektoren und andere verwendet, ohne darauf beschränkt zu sein. Auch können voranfliegende Drohnen zum Erfassen der vorausliegenden Pflanzen eingesetzt werden.

Im vorliegenden Ausführungsbeispiel liefert das Trägerfahrzeug 30 über eine Zapfwelle 31 oder einen Hydraulikkreislauf mechanische Antriebsenergie für einen elektrischen Generator 32 des zweiten Moduls 20, der sich im hinteren Bereich (wie gezeigt) oder vorderen Bereich am Trägerfahrzeug 30 befinden kann. Die einzelnen Module der Behandlungs-Vorrichtung 1 sind beispielsweise als Anbaugeräte angeordnet, z.B. mit Dreipunktaufhängungen. Sonderkulturen erfordern Sondermaschinen, z.T. schon als Trägerfahrzeug 30 mit speziellen Aufhängungen, ggf. auch seitlich oder unter dem Trägerfahrzeug 30. Bei Behandlungs-Vorrichtungen 1 mit sehr hohem Energiebedarf durch z.B. sehr hohe Arbeitsbreiten oder Trägerfahrzeuge 30 ohne ausreichend freie Leistungskapazitäten können auch unabhängige Stromerzeugersysteme eingesetzt werden, die auf dem Trägerfahrzeug 30 angekoppelt, aufgesattelt oder auf einem Anhänger bewegt werden können.

Elektrischer Strom wird von dem Generator 32 mit elektrischen Leitungen zu mindestens einer Transformations- und Kontrolleinheit 33 des zweiten Moduls 20 geleitet. Dort wird der elektrische Strom für die Transformation umgewandelt und dann in zentral oder verteilt positionierten Transformatoren und weiteren Steuerungseinheiten auf die vorbestimmte elektrische Spannung mit einer vorbestimmten Restwelligkeit gebracht.

Das zweite Modul 20 weist im vorliegenden Ausführungsbeispiel eine Mehrzahl an Applikatoreinheiten 2 mit jeweils einer Mehrzahl von Applikatoren 21a, 21b, 21c zum Beaufschlagen von Pflanzen mit elektrischem Gleichstrom auf.

Unter Applikatoren 21a, 21b, 21c werden hier jeweils einzelnen, ggf. mehrfach vorhandenen und räumlich voneinander getrennten elektrisch leitenden und im Normalfall mit einer Hochspannungsquelle verbundenen Kontakteinheiten zwischen Pflanzen verstanden. Die Applikatoren 21a, 21b, 21c weisen im Betrieb je nach Schaltung und Kontaktierung ein unterschiedliches elektrisches Potential auf. Unter einer Applikatoreinheit 2 wird eine Einheit aus mindestens zwei Applikatoren 21a, 21b, 21c verstanden, die im Betrieb ein unterschiedliches elektrisches Potential aufweisen und mit des unterschiedlichen Potentialausgängen einer einzelnen Hochspannungseinheit verbunden und damit eineindeutig zugeordnet und einheitlich elektrisch angesteuert wird. Es ist jedoch möglich, Teile einer Applikatoreinheit 2 elektrisch abzuschalten. Eine Applikatoreinheit 2 kann, muss aber nicht aus einer mechanisch fixierten Baugruppe bestehen und sich dadurch von anderen Applikatoreinheiten abgrenzen. So ist es ausführungsgemäß möglich, dass eine Applikatoreinheit 2 auf mehrere mechanisch und räumlich unabhängige Baugruppen verteilt ist. Umgekehrt können auch mehrere Applikatoreinheiten 2 zu einer in sich starren Baugruppe zusammengefasst sein.

Im vorliegenden Ausführungsbeispiel ist die Behandlungs-Vorrichtung 1 dazu ausgebildet, Pflanzen mit einer elektrischen Spannung U zu beaufschlagen, die eine gleichgerichtete und geglättete elektrische Gleichspannung ist. Im vorliegenden Ausführungsbeispiel weist die gleichgerichtete und geglättete elektrische Gleichspannung eine Spannung von 1600 V bis 5500 V mit einer maximalen Restwelligkeit von 5 % bis 20 % (im Frequenzbereich 60 kHz bis 100 kHz) auf.

Die elektrische Spannung setzt sich aus einem konstanten Gleichwert und einem Restwelligkeitswert additiv zusammen, wobei der Restwelligkeitswert zwischen einem Maximalwert und einem Minimalwert schwankt. Die Differenz zwischen dem Maximalwert und dem Minimalwert entspricht dem Spitze-Tal-Wert.

Der Spitze-Tal-Wert ist kleiner als 1000 V. Im vorliegenden Ausführungsbeispiel liegt der Spitze-Tal-Wert in Abhängigkeit von der Last (reiner ohmscher Widerstand) in einem Bereich von 100 V bis 500 V. Abweichend vom vorliegenden Ausführungsbeispiel kann der Spitze-Tal-Wert in Abhängigkeit von der Last (reiner ohmscher Widerstand) auch einem Bereich von 50 V bis 300 V oder 100 V bis 800 V oder 300 V bis 800 V liegen. Die Restwelligkeit kann im Frequenzbereich von 20 kHz bis 200 kHz, von 20 kHz bis 300 kHz, oder von 20 kHz bis 500 kHz liegen.

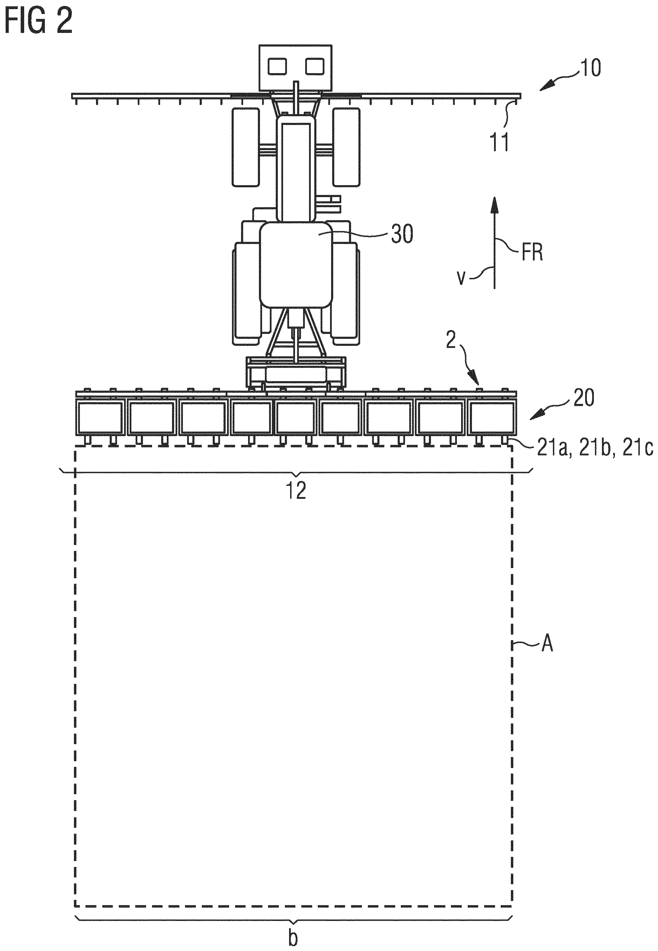

Es wird nun zusätzlich auf die Figur 2 Bezug genommen.

Die Mehrzahl der Applikatoreinheiten 2 sind in einer Applikatorreihe 12 angeordnet, wobei sich die Erstreckungsrichtung der Applikatorreihe 12 vorzugsweise quer, im vorliegenden Ausführungsbeispiel unter einem Winkel von 90°, zu der Fahrtrichtung FR des Trägerfahrzeugs 30 erstreckt. Die Applikatoren 21a, 21b, 21c der Applikatorreihe 12 sind an einer Parallelogramm-ähnlichen zweiten Trägerkonstruktion 24 angeordnet.

In der Figur 2 ist dargestellt, dass mit der Behandlungs-Vorrichtung 1 eine Fläche A mit Pflanzen durch Beaufschlagen mit elektrischem Gleichstrom behandelt wird. Hierzu wird von dem Trägerfahrzeug 30 die Behandlungs-Vorrichtung 1 in Fahrtrichtung FR mit einer Fahrgeschwindigkeit v über die Fläche A bewegt und über die gesamte Breite b der Applikatorreihe 12 mit elektrischem Gleichstrom beaufschlagt.

Um einer unerwünschten Lichtbogenbildung entgegenzuwirken ist das erste Modul 10 zum gezielten Auftragen des Stoffgemischs auf Pflanzen ausgebildet, wobei durch das aufgetragene Stoffgemisch der elektrische Übergangswiderstand der Pflanzen um mindestens 5% reduziert wird. Im vorliegenden Ausführungsbeispiel liegt die Reduzierung des elektrischen Übergangswiderstands in einem Bereich von 10% bis 30%.

Eine Überprüfung kann z.B. durch Messungen der elektrischen Spannung zwischen zwei der Applikatoren 21a, 21b, 21c und des fließenden elektrischen Stromes erfolgen, wobei an der gemessenen elektrischen Spannung und des gemessenen elektrischen Stromes ein Wert repräsentativ für den ohmschen Widerstand bestimmt wird. Mit anderen Worten, es werden zwei Messergebnisse verglichen, nämlich einmal mit Aufbringen und einmal ohne Aufbringen des Stoffgemisches.

Um den elektrischen Übergangswiderstand zu reduzieren kann mit dem ersten Modul 10 ein Stoffgemisch mit einer elektrischen Leitfähigkeit verwendet, die höher als die elektrische Leitfähigkeit von Trinkwasser ist. Z.B. kann ein Stoffgemisch mit einer elektrischen Leitfähigkeit von mindestens 3000 µS/cm aufgebracht werden, wobei das Stoffgemisch Wasser mit einer elektrischen Leitfähigkeit kleiner als 3000 µS/cm enthält. Im vorliegenden Ausführungsbeispiel wird zum Mischen herkömmliches Trinkwasser mit einer elektrischen Leitfähigkeit im Bereich von 300 µS/cm bis 800 µS/cm verwendet.

Abweichend vom vorliegenden Ausführungsbeispiel kann zum Mischen auch Wasser verwendet werden, dessen elektrische Leitfähigkeit größer als 800 µS/cm ist. So kann auch Trinkwasser verwendet werden, dessen Wert für die elektrische Leitfähigkeit gerade noch unterhalb dem Grenzwert der Trinkwasserverordnung von 2790 µS/cm für die elektrische Leitfähigkeit liegt. Ferner kann abweichend vom vorliegenden Ausführungsbeispiel zum Mischen auch Wasser verwendet werden, dessen elektrische Leitfähigkeit kleiner als 300 µS/cm ist. So kann z.B. auch reines oder destilliertes Wasser mit einer elektrischen Leitfähigkeit von 54,9 µS/cm verwendet werden.

Die Behandlungs-Vorrichtung 1 ist im vorliegenden Ausführungsbeispiel dazu ausgebildet, das Stoffgemisch mit Wasser mit einer elektrischen Leitfähigkeit zu mischen, bis das Stoffgemisch z.B. eine elektrische Leitfähigkeit von mindestens 3000 µS/cm aufweist. Mit anderen Worten, das Ausgangs-Stoffgemisch, das eine höhere elektrische Leitfähigkeit als 3000 µS/cm aufweist, wird durch Mischen mit Wasser mit einer geringeren elektrischen Leitfähigkeit verdünnt, um die gewünschte elektrische Leitfähigkeit von mindestens 3000 µS/cm einzustellen.

Im vorliegenden Ausführungsbeispiel weist das aufgebrachte Stoffgemisch eine elektrische Leitfähigkeit auf, die in einem Bereich von 3000 µS/cm bis 10000 µS/cm, in einem Bereich 4000 µS/cm bis 7000 µS/cm, oder in einem Bereich von 5000 µS/cm bis 6000 µS/cm liegt.

Des Weiteren kann die Behandlungs-Vorrichtung 1 im vorliegenden Ausführungsbeispiel dazu ausgebildet sein, mittels einer Leitwertmessung die elektrische Leitfähigkeit des Stoffgemisches zu überprüfen. Wenn die gemessene elektrische Leitfähigkeit zu gering ist, kann ein Ansteuersignal erzeugt werden, das einen Stopp des Betriebs und/oder eine Anpassung des Mischungsverhältnisses Stoffgemisch/Wasser bewirkt.

Mit dem zweiten Modul 20 kann dann eine elektrische Gleichspannung verwendet werden, um die Pflanzen mit elektrischem Strom zu beaufschlagen.

Das zweite Modul 20 ist im vorliegenden Ausführungsbeispiel derart in Fahrtrichtung FR von dem ersten Modul 10 beabstandet angeordnet, dass sich zwischen dem Aufbringen des Stoffgemisches und dem Beaufschlagen mit elektrischem Strom eine Mindesteinwirkzeit für das Stoffgemisch ergibt.

Im vorliegenden Ausführungsbeispiel liegt der Abstand zwischen dem ersten Modul 10 und dem zweiten Modul 20 in Bereich von 5 m bis 10 m. Im Betrieb bewegt sich das Trägerfahrzeug 30 mit einer Fahrgeschwindigkeit v im Schrittgeschwindigkeitsbereich, d.h. mit einer Geschwindigkeit von ca. 5 km/h. Somit liegt die Einwirkzeit im vorliegenden Ausführungsbeispiel im Bereich von 5 s bis 8 s. Die Einwirkzeit kann abweichend vom vorliegenden Ausführungsbeispiel auch im Bereich von 1 s bis 10 s liegen.

Ferner kann die Behandlungs-Vorrichtung 1 dazu ausgebildet sein, einen sich zwischen zwei Applikatoren 21a, 21b, 21c gebildeten Lichtbogen zu erfassen, z.B. durch Erfassen und Auswerten der elektrischen Stromstärke des zwischen den betroffenen Applikatoren 21a, 21b, 21c fließenden elektrischen Stromes und/oder durch Erfassen und Auswerten einer zwischen Applikatoren 21a, 21b, 21c anliegenden elektrischen Spannung mit einem vorbestimmten Schwellwert.

Alternativ kann die elektrische Spannung als Referenzwert bzgl. Lichtbogenbildung (Kurzschluss) zwischen zwei Applikatoren 21a, 21b, 21c herangezogen werden. Fällt die elektrische Spannung für einen definierten Zeitraum unter einen vorbestimmten Schwellwert, so wird das als Kurzschluss zwischen zwei Elektroden gewertet und als Gegenmaßnahme eine Abschaltung, um den Lichtbogen zu löschen.

Neben der Einleitung von Maßnahmen zum Löschen des erfassten Lichtbogens kann die Behandlungs-Vorrichtung 1 dazu ausgebildet sein, die Anzahl der erfassten Lichtbögen innerhalb einer vorbestimmten Zeitdauer und/oder bei der Elektrobehandlung einer vorbestimmten Fläche zu erfassen und die elektrische Leitfähigkeit entsprechend, z.B. durch Erhöhen, anzupassen. Das Anpassen der elektrischen Leitfähigkeit kann mit einer vorbestimmten Schrittweite erfolgen, oder es wird von einem Regler eine entsprechende Stellgröße bestimmt.

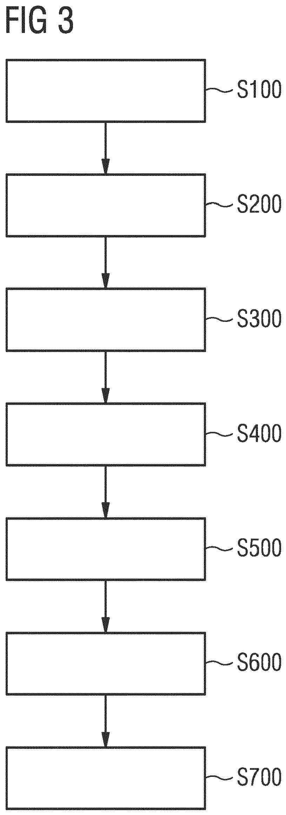

Es wird nun unter zusätzlicher Bezugnahme auf die Figur 3 ein Verfahrensablauf zum Betrieb der Behandlungs-Vorrichtung 1 erläutert.

Auf z.B. eine Inbetriebnahme der Behandlungs-Vorrichtung 1 hin erfolgt in einem ersten Schritt S100 ein gezieltes Auftragen eines Stoffgemischs auf mindestens ein Pflanzenteil, wobei das Stoffgemisch mindestens eine den elektrischen Übergangswiderstand im Bereich der pflanzlichen Oberfläche senkende Komponente aufweist, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält. Abweichend vom vorliegenden Ausführungsbeispiel kann das Stoffgemisch eine oder mehrere Komponenten aufweisen, wobei eine der Komponenten Mehrfachwirkungen aufweist, wie z.B. die Wirkung einer oberflächenaktiven Substanz und die Wirkung einer viskositätserhöhenden Substanz.

In einem weiteren Schritt S200 kann vorgesehen sein, dass mittels einer Leitwertmessung die elektrische Leitfähigkeit des Stoffgemisches überprüft wird. Wenn die gemessene elektrische Leitfähigkeit zu gering ist, kann ein Ansteuersignal erzeugt werden, das einen Stopp des Betriebs und/oder eine Anpassung des Mischungsverhältnisses Stoffgemisch/Wasser bewirkt.

In einem weiteren Schritt S300 wird das Stoffgemisch auf Pflanzen aufgetragen. Das aufgebrachte Stoffgemisch weist mindestens eine Komponente auf, die einen elektrischen Übergangswiderstand im Bereich der Oberfläche der Pflanzen senkt, und zwar um mindestens 5%.

Das Stoffgemisch weist mindestens eine den elektrischen Übergangswiderstand im Bereich der pflanzlichen Oberfläche senkende Komponente auf, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Im vorliegenden Ausführungsbeispiel weist das Stoffgemisch eine elektrische Leitfähigkeit von mindestens 3000 µS/cm auf. Ferner weist im vorliegenden Ausführungsbeispiel das Stoffgemisch Wasser mit einer elektrischen Leitfähigkeit kleiner als 3000 µS/cm auf.

Nach Ablauf der Mindesteinwirkzeit werden dann in einem weiteren Schritt S400 die mit dem Stoffgemisch benetzten Pflanzen mit elektrischem Strom beaufschlagt, wobei im vorliegenden Ausführungsbeispiel hierzu eine elektrische Gleichspannung verwendet wird.

In einem weiteren Schritt S500 kann vorgesehen sein, einen sich zwischen zwei Applikatoren 21a, 21b oder 21c gebildeten Lichtbogen zu erfassen, z.B. durch Erfassen und Auswerten der elektrischen Stromstärke und/oder elektrischen Spannung des zwischen den betroffenen Applikatoren 21a, 21b, 21c fließenden elektrischen Stromes bzw. anliegenden elektrischen Spannung.

Nach der Feststellung von Lichtbögen werden dann Maßnahmen zum Löschen eingeleitet, wie z. B. kurzzeitiges Ausschalten. Derartige Maßnahmen zur Lichtbogenlöschung reduzieren jedoch die Arbeitseffizienz, da in der Abstellzeit keine Pflanzen behandelt werden, das Trägerfahrzeug 30 mit einer Vielzahl an Applikatoreinheiten 2 jedoch auf dem zu behandelnden Bereich weiterfährt. So führt jeder Lichtbogen, der zu einer Abschaltung eines Applikators 21a, 21b, 21c führt, bei einer Arbeitsgeschwindigkeit von 8 km/h führt dementsprechend schon eine Abschaltzeit (plus Wiederanlaufzeit auf maximale Leistung) von 0,45 s zu einer Ausfalllänge der Behandlung von 1 m. Dies bedeutet z. B. bei der Kartoffelsikkation eine Nichtbehandlung von 3 Kartoffelpflanzen entsprechend 3 kg Ertrag bzw. ca. 15-30 Kartoffeln, von denen jede beim Verfaulen ganze Lagercontainer anstecken kann. Gleichzeitig haben auch erkannte Lichtbögen, die dann gelöscht werden, immer noch ein Restrisiko einer unerwünschten und nachteiligen Feld- oder Geräteentzündung (insbesondere bei der Getreidesikkation) und verkürzen die Nutzungszeit der Applikatoren durch erhöhten Verschleiß.

Bei Einsatz zur Unkrautkontrolle kann schon ein Behandlungsausfall auf 1 m Arbeitslänge dazu führen, dass einzelne Unkräuter mit einem Samenpotential von über 10.000 Samen pro Pflanze stehenbleiben und damit die spätere Verunkrautung von 10 bis 100 m² verursachen können.

Neben der Einleitung von Maßnahmen zum Löschen des erfassten Lichtbogens kann in einem weiteren Schritt S600 vorgesehen sein, die Anzahl der erfassten Lichtbögen innerhalb einer vorbestimmten Zeitdauer und/oder bei der Elektrobehandlung einer vorbestimmten Fläche zu erfassen und zu bewerten. Überschreitet die spezifische Zahl der Lichtbögen eine festgelegte Häufigkeit, kann die elektrisch leitfähige Flüssigkeit auf den Pflanzen oder Oberflächen in einem weiteren Schritt S700 entsprechend angepasst werden. Die Verbesserung der Lichtbogenunterdrückung durch das Anpassen der elektrischen Leitfähigkeit kann sowohl durch eine Erhöhung der Ausbringungsmenge des aufzutragenden Stoffgemisches erfolgen und/oder durch eine Erhöhung der Leitfähigkeit des Stoffgemisches durch ein erhöhtes Zudosieren von Stoffkonzentrat. Die Veränderung von Konzentration und /oder Ausbringungsmenge kann mit einer vorbestimmten Schrittweite erfolgen, oder es wird von einem Regler eine entsprechende Stellgröße bestimmt.

Entsprechend der vorhandenen Sensorik und Inputparameter aus der Lichtbogendetektion können die Regelparameter nach weiteren Messungen wieder auf das ursprüngliche Maß kontinuierlich oder stufenweise heruntergefahren werden.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch abweichend vom vorliegenden Ausführungsbeispiel einzelne Schritte übersprungen, ergänzt oder ausgelassen werden.

So kann die Anzahl von ungewollten Spannungsüberschlägen, begleitet von Lichtbögen zwischen zwei Applikatoren einer Applikatoreinheit, signifikant reduziert werden, ohne die Effizienz des Gesamtverfahrens zu reduzieren oder die Produktqualität negativ zu beeinflussen.

### Bezugszeichenliste

- 1: Behandlungs-Vorrichtung
- 2: Applikatoreinheit
- 10: erstes Modul
- 11: Düse
- 12: Applikatorreihe
- 13: erste Trägerkonstruktion
- 14: Flüssigkeitsbehälter
- 15: übergangswiderstandsenkendes Medium
- 16: Sensor
- 20: zweites Modul
- 21a: elektrischer Applikator
- 21b: elektrischer Applikator
- 21c: elektrischer Applikator
- 24: zweite Trägerkonstruktion
- 30: Trägerfahrzeug
- 31: Zapfwelle
- 32: Generator
- 33: Transformations- und Kontrolleinheit

- A: Fläche
- b: Breite
- FR: Fahrtrichtung
- v: Fahrgeschwindigkeit

- S100: Schritt
- S200: Schritt
- S300: Schritt
- S400: Schritt
- S500: Schritt
- S600: Schritt
- S700: Schritt

## Patentansprüche

1. Verfahren zur Lichtbogenreduzierung bei Elektro-Behandlungen von Pflanzen, insbesondere während einer Sikkation von Feldfrüchten, zur Gründüngungskontrolle oder zur Kontrolle von Beikraut, mit den Schritten:
(S300) gezieltes Auftragen eines Stoffgemischs auf Pflanzen, wobei das Stoffgemisch mindestens eine einen elektrischen Übergangswiderstand im Bereich der Oberfläche der Pflanzen senkende Komponente aufweist, wobei durch das aufgetragene Stoffgemisch der elektrische Übergangswiderstand um mindestens 5% reduziert wird,
(S400) Beaufschlagen der Pflanzen mit elektrischem Strom,
wobei das Verfahren **gekennzeichnet ist durch** die Schritte
(S500) Erfassen eines sich zwischen zwei Applikatoren (21a, 21b, 21c) gebildeten Lichtbogens,
(S600) Erfassen und Bewerten der Anzahl der erfassten Lichtbögen innerhalb einer vorbestimmten Zeitdauer und/oder bei der Elektrobehandlung einer vorbestimmten Fläche (A), und
(S700) Anpassen des Stoffgemischs, wenn die erfasste Anzahl der Lichtbögen eine festgelegte Häufigkeit überschreitet.

2. Verfahren nach Anspruch 1, wobei ein Stoffgemisch mit einer elektrischen Leitfähigkeit von mindestens 3000 µS/cm verwendet wird.

3. Verfahren nach Anspruch 1 oder 2, wobei eine elektrische Gleichspannung verwendet wird, um die Pflanzen mit elektrischem Strom zu beaufschlagen.

4. Verfahren nach einem der Ansprüche 1 bis 3, wobei ein Ausgangs-Stoffgemisch verwendet wird, das in einem weiteren Schritt (S100) mit Wasser gemischt wird, um das auf die Pflanzen aufzutragende Stoffgemisch zu erhalten.

5. Verfahren nach einem der Ansprüche 1 bis 4, wobei das Stoffgemisch mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

6. Behandlungs-Vorrichtung (1) zur Lichtbogenreduzierung bei Elektro-Behandlungen von Pflanzen, insbesondere während einer Sikkation von Feldfrüchten, zur Gründüngungskontrolle oder zur Kontrolle von Beikraut, wobei die Behandlungs-Vorrichtung (1) ein erstes Modul (10) zum gezielten Auftragen eines Stoffgemischs auf Pflanzen aufweist, wobei das Stoffgemisch mindestens eine einen elektrischen Übergangswiderstand im Bereich der Oberfläche der Pflanzen senkende Komponente aufweist, wobei durch das aufgetragene Stoffgemisch der elektrische Übergangswiderstand um mindestens 5% reduziert wird, und wobei die Behandlungs-Vorrichtung (1) ein zweites Modul (20) zum Beaufschlagen der Pflanzen mit elektrischem Strom aufweist, **dadurch gekennzeichnet, dass** die Behandlungs-Vorrichtung (1) dazu ausgebildet ist, einen sich zwischen zwei Applikatoren (21a, 21b, 21c) gebildeten Lichtbogen zu erfassen, die Anzahl der erfassten Lichtbögen innerhalb einer vorbestimmten Zeitdauer und/oder bei der Elektrobehandlung einer vorbestimmten Fläche (A) zu erfassen und zu bewerten, und das Stoffgemisch anzupassen, wenn die erfasste Anzahl der Lichtbögen eine festgelegte Häufigkeit überschreitet.

7. Behandlungs-Vorrichtung (1) nach Anspruch 6, wobei das erste Modul (10) dazu ausgebildet ist, ein Stoffgemisch zu verwenden, das eine elektrische Leitfähigkeit von mindestens 3000 µS/cm aufweist.

8. Behandlungs-Vorrichtung (1) nach Anspruch 6 oder 7, wobei das zweite Modul (20) dazu ausgebildet ist, eine elektrische Gleichspannung zu verwenden, um die Pflanzen mit elektrischem Strom zu beaufschlagen.

9. Behandlungs-Vorrichtung (1) nach einem der Ansprüche 6 bis 8, wobei das erste Modul (10) dazu ausgebildet ist, ein Ausgangs-Stoffgemisch zu verwenden, das mit Wasser gemischt ist, um das auf die Pflanzen aufzutragende Stoffgemisch zu bilden.

10. Behandlungs-Vorrichtung (1) nach einem der Ansprüche 6 bis 9, wobei das erste Modul (10) dazu ausgebildet ist, ein Stoffgemisch zu verwenden, das mindestens eine erste Komponente aufweist, die mindestens eine oberflächenaktive Substanz ausgewählt aus der Gruppe bestehend aus Tensiden enthält, und mindestens eine zweite Komponente aufweist, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

11. Trägerfahrzeug (30), insbesondere selbstfahrende Landmaschine, mit einer Behandlungs-Vorrichtung (1) nach einem der Ansprüche 6 bis 10.

12. Bausatz, enthaltend Komponenten einer Behandlungs-Vorrichtung (1) nach einem der Ansprüche 6 bis 10 zum Bilden eines Trägerfahrzeugs (30) nach Anspruch 11.

## Claims

1. Method for reducing arcs during electrical treatments of plants, in particular during desiccation of field crops, for controlling green manure or for controlling weeds, the method comprising the steps of:
(S300) targeted application of a composition to plants, wherein the composition has at least one component which reduces an electrical contact resistance in the region of the surface of the plants, wherein the applied composition reduces the electrical contact resistance by at least 5%,
(S400) applying electrical current to the plants,
wherein the method is **characterized by** the steps of
(S500) detecting an arc formed between two applicators (21a, 21b, 21c),
(S600) detecting and evaluating the number of detected arcs within a predetermined time period and/or during the electrical treatment of a predetermined area (A), and
(S700) adapting the composition if the detected number of arcs exceeds a specified frequency.

2. Method according to claim 1, wherein a composition having an electrical conductivity of at least 3000 µS/cm is used.

3. Method according to either claim 1 or claim 2, wherein an electrical DC voltage is used to apply electrical current to the plants.

4. Method according to any of claims 1 to 3, wherein a starting composition is used which is mixed with water in a further step (S100) in order to obtain the composition to be applied to the plants.

5. Method according to any of claims 1 to 4, wherein the composition has at least one first component containing at least one surface-active substance selected from the group consisting of surfactants, and at least one second component containing at least one viscosity-increasing substance selected from the group consisting of pure silicas, fumed silicas, mixed oxides, magnesium layer silicates, organic additives based on biogenic oils and derivatives thereof, polyamides and modified carbohydrates.

6. Treatment device (1) for reducing arcs during electrical treatments of plants, in particular during desiccation of field crops, for controlling green manure or for controlling weeds, wherein the treatment device (1) has a first module (10) for the targeted application of a composition to plants, wherein the composition has at least one component which reduces an electrical contact resistance in the region of the surface of the plants, wherein the applied composition reduces the electrical contact resistance by at least 5%, and wherein the treatment device (1) has a second module (20) for applying electrical current to the plants, **characterized in that** the treatment device (1) is designed to detect an arc formed between two applicators (21a, 21b, 21c), to detect and evaluate the number of detected arcs within a predetermined time period and/or during the electrical treatment of a predetermined area (A), and to adapt the composition if the detected number of arcs exceeds a specified frequency.

7. Treatment device (1) according to claim 6, wherein the first module (10) is designed to use a composition having an electrical conductivity of at least 3000 µS/cm.

8. Treatment device (1) according to either claim 6 or claim 7, wherein the second module (20) is designed to use an electrical DC voltage to apply electrical current to the plants.

9. Treatment device (1) according to any of claims 6 to 8, wherein the first module (10) is designed to use a starting composition mixed with water in order to form the composition to be applied to the plants.

10. Treatment device (1) according to any of claims 6 to 9, wherein the first module (10) is designed to use a composition, which has at least one first component containing at least one surface-active substance selected from the group consisting of surfactants, and at least one second component containing at least one viscosity-increasing substance selected from the group consisting of pure silicas, fumed silicas, mixed oxides, magnesium layer silicates, organic additives based on biogenic oils and derivatives thereof, polyamides and modified carbohydrates.

11. Carrier vehicle (30), in particular a self-propelled agricultural machine, having a treatment device (1) according to any of claims 6 to 10.

12. Kit containing components of a treatment device (1) according to any of claims 6 to 10 for forming a carrier vehicle (30) according to claim 11.

## Revendications

1. Procédé pour la réduction des arcs électriques pendant des traitements électriques des plantes, notamment pendant un séchage de cultures, pour le contrôle de l'engrais vert ou pour le contrôle des mauvaises herbes, comprenant les étapes de
(S300) application ciblée d'un mélange de substances aux plantes; le mélange de substances ayant au moins un composant qui diminue la résistance électrique de contact dans la région de la surface des plantes; la résistance électrique de contact étant réduite d'au moins 5% par le mélange de substances appliqué,
(S400) application d'un courant électrique aux plantes,
le procédé étant **caractérisé par** les étapes de
(S500) détection d'un arc électrique formé entre deux applicateurs (21a, 21b, 21c),
(S600) détection et évaluation du nombre d'arcs détectés dans une période de temps prédéterminée et/ou pendant le traitement électrique d'une zone prédéterminée (A), et
(S700) régulation du mélange de substances si le nombre d'arcs détectés dépasse une fréquence prédéterminée.

2. Procédé selon la revendication 1, dans lequel on utilise un mélange de substances ayant une conductivité électrique d'au moins 3000 µS/cm.

3. Procédé selon la revendication 1 ou 2, dans lequel on utilise une tension électrique continue pour appliquer un courant électrique aux plantes.

4. Procédé selon l'une des revendications 1 à 3, dans lequel on utilise un mélange de substances de départ qui est mélangé avec de l'eau dans une étape supplémentaire (S100) pour obtenir le mélange de substances à appliquer aux plantes.

5. Procédé selon l'une des revendications 1 à 4, dans lequel le mélange de substances comprend au moins un premier composant, comprenant au moins une substance à activité de surface sélectionnée du groupe constitué par des tensioactifs et au moins un deuxième composant comprenant au moins une substance qui augmente la viscosité sélectionnée du groupe constitué par des silices pures, silices fumées, oxydes mixtes, silicates en couches de magnésium, additifs organiques à base d'huiles biogéniques et leurs dérivés, polyamides et glucides modifiés.

6. Dispositif de traitement (1) pour la réduction des arcs électriques pendant des traitements électriques des plantes, notamment pendant un séchage de cultures, pour le contrôle de l'engrais vert ou pour le contrôle des mauvaises herbes; le dispositif de traitement (1) comprenant un premier module (10) pour l'application ciblée d'un mélange de substances aux plantes; le mélange de substances comprenant au moins un composant qui diminue une résistance électrique de contact dans la région de la surface des plantes, la résistance électrique de contact étant réduite d'au moins 5% par le mélange de substances appliqué, et le dispositif de traitement (1) comprenant un deuxième module (20) pour l'application d'un courant électrique aux plantes, **caractérisé en ce que** le dispositif de traitement (1) est configuré pour détecter un arc électrique formé entre deux applicateurs (21a, 21b, 21c), pour détecter et évaluer le nombre d'arcs électriques détectés dans une période de temps prédéterminée et/ou pendant le traitement électrique d'une zone prédéterminée (A), et pour régler le mélange de substances si le nombre d'arcs électriques détectés dépasse une fréquence prédéterminée.

7. Dispositif de traitement (1) selon la revendication 6, dans lequel le premier module (10) est configuré pour utiliser un mélange de substances ayant une conductivité électrique d'au moins 3000 µS/cm.

8. Dispositif de traitement (1) selon la revendication 6 ou 7, dans lequel le deuxième module (20) est configuré pour utiliser une tension électrique continue pour appliquer un courant électrique aux plantes.

9. Dispositif de traitement (1) selon l'une des revendications 6 à 8, dans lequel le premier module (10) est configuré pour utiliser un mélange de substances de départ mélangé avec de l'eau pour former le mélange de substances à appliquer aux plantes.

10. Dispositif de traitement (1) selon l'une des revendications 6 à 9, dans lequel le premier module (10) est configuré pour utiliser un mélange de substances comprenant au moins un premier composant, contenant au moins une substance à activité de surface sélectionnée du groupe constitué par des tensioactifs, et au moins un deuxième composant, contenant au moins une substance qui augmente la viscosité sélectionnée du groupe constitué par des silices pures, silices fumées, oxydes mixtes, silicates en couches de magnésium, additifs organiques à base d'huiles biogéniques et leurs dérivés, polyamides et glucides modifiés.

11. Véhicule porteur (30), notamment une machine agricole automotrice, ayant un dispositif de traitement (1) selon l'une des revendications 6 à 10.

12. Ensemble comprenant des composants d'un dispositif de traitement (1) selon l'une des revendications 6 à 10 pour former un véhicule porteur (30) selon la revendication 11.
